# EUROPÄISCHE PATENTSCHRIFT

(11) **EP 0 820 845 B1**
(45) Veröffentlichungstag und Bekanntmachung des Hinweises auf die Patenterteilung: **30.10.2002**
(21) Anmeldenummer: 97111372.5
(22) Anmeldetag: 05.07.1997
(51) Int. Cl.: B29B 7/02, B29B 7/86, B01F 15/00, F16J 15/40

(54) **Elastomerinnenmischer**
Internal mixer for elastomers
Mélangeur interne pour des élastomères

(30) Priorität: 25.07.1996 DE 19630021
(43) Veröffentlichungstag der Anmeldung: 28.01.1998
(73) Patentinhaber: Continental Aktiengesellschaft, 30165 Hannover (DE); Peter, Julius, Dr., 1130 Wien (AT)
(72) Erfinder: Peter, Julius, Dr., 1130 Wien (AT)
(74) Vertreter: Depmeyer, Jochen

(56) Entgegenhaltungen:
- EP-A- 0 262 917
- DE-A- 3 606 542
- US-A- 3 318 606
- US-A- 3 610 585
- US-A- 3 612 169
- US-A- 4 291 888
- US-A- 4 412 747
- US-A- 4 773 654
- US-A- 4 877 328
- US-A- 5 108 188
- US-A- 5 433 522
- PATENT ABSTRACTS OF JAPAN vol. 010, no. 002 (M-444), 8.Januar 1986 & JP 60 166411 A (MATSUSHITA DENKO KK), 29.August 1985,

## Beschreibung

Die Erfindung betrifft einen Elastomerinnenmischer, insb. einen Mischer für Kautschuk und Kautschukmischungen, mit einer Mischkammer, einem oder zwei hierin befindlichen Rotoren mit die Wandung der Mischkammer bzw. ihres Gehäuses durchsetzenden Wellen und einer oben gelegenen, verschließbaren Einfüllöffnung für das Mischgut und einem unten gelegenen, zum Verschließen der Austrittsöffnung dienenden, z.B. klappbaren Sattel, wobei dem Mischer eine oder mehrere Anschlüsse an eine Saugluft- oder Drucklufteinrichtung zur Beeinflussung des Druckes innerhalb der Mischkammer zugeordnet sind.

Ein Innenmischer dieser Art ist aus der US-A-3610585 bekannt.

Bei verschiedenen Einsatzfällen ist es zweckmäßig, z.B. Kautschukmischungen unter Vakuum herzustellen oder die Mastikation von Naturkautschuk unter erhöhtem Luftdruck durchzuführen. Es ist zwar bekannt, die Mischkammer durch Absaugleitungen zu evakuieren, und zwar durch eine Absaugung im Bereich der verschließbaren Einfüllöffnung des Mischers. Diese Art der Mischung ist jedoch unvollkommen, weil die Rotorenwellen außerhalb der Mischkammer gelagert und angetrieben werden müssen. Die dazu erforderlichen Durchbrechungen in der Wandung der Mischkammer bzw. des Mischgehäuses und die damit gegebenen Undichtigkeiten verhindern nämlich ausreichend große Druckunterschiede gegenüber der Atmosphäre.

Bei einem bekannten Mischer mit einer Rotorenwelle (US-A-3318606) ist diese an den Durchbrechungen in der Wandung der Mischkammer durch besondere Dichtungsgehäuse hindurchgeführt, wobei die Dichtungsgehäusen an Druckluftquellen angegeschlossen sind, um in ihnen einen gegenüber der Mischkammer erhöhten Luftdruck aufrecht zu erhalten. Lager und Antriebselemente der Rotorenwelle befinden sich außerhalb der Gehäuse. Eine gute Abdichtung der Mischkammer ist auf diese Weise nur aufwendig zu erreichen. Bei dem bekannten Mischer stehen jedoch andere Ziele im Vordergrund. Er dient der Zubereitung von Lebensmitteln (Teig), und der erhöhte Druck in den Dichtungsgehäusen soll der Hygiene wegen verhindern, daß das Mischgut mit Lagerungen und anderen Maschinenteilen in Berührung kommt.

Der Erfindung liegt demgegenüber die Aufgabe zugrunde, bei Mischern der eingangs erwähnten Art in der Mischkammer mit einfachen technischen Mitteln ausreichend große Über- bzw. Unterdrücke erzeugen zu können.

Zur Lösung dieser Aufgabe sind erfindungsgemäß die für den Durchtritt der Wellenenden der Rotoren durch die Wandungen der Mischkammer bzw. des Gehäuses dienenden Durchbrechungen außen von praktisch luftdichten Wandungen umschlossen, die einen oder mehrere Anschlüsse für eine Luftunterdruck- bzw. Luftüberdruckeinrichtung aufweisen, wobei die Wandungen auch den Antrieb des Mischers umschließen.

Die Wandungen können die vornehmlich seitlichen Bereiche des Mischers kastenartig umschließen, also auf der Seite des Mischers, auf der sich die Achsstummel der Rotoren befinden. An der gegenüberliegenden Seite können die Wandungen ebenfalls kastenartig ausgebildet sein, jedoch können sie auch mit besonderen Dichtungen ausgestattet sein, um einen praktisch luftdichten Durchtritt der Rotorwellen sicherzustellen.

Es ist an sich möglich, ausschließlich durch diese Anschlüsse die gewünschten Druckverhältnisse innerhalb der Mischkammer sicherzustellen, jedoch werden sie vorzugsweise zusammen mit den erwähnten Einrichtungen bzw. Stutzen im Bereich der Einfüllöffnung des Mischers genutzt, da sich in diesem Falle besonders gute Druckverhältnisse erzielen lassen. Im Falle dieser beiden Massnahmen ist es besonders vorteilhaft, wenn die erfindungsgemässen seitlichen Hohlräume mit solchen Drücken beaufschlagt werden, die auch mit Hilfe derjenigen Einrichtungen erzeugt werden, die sich im Bereich der Einfüllöffnung des Mischers befinden.

Wenn es erforderlich ist, auch die antriebsseitigen Anlagen des Mischers einzuschliessen, so ist es aufgrund der Erfindung vorteilhaft, hydraulische Mischerantriebe zu verwenden. Diese Antriebe sind besonders kompakt und daher für kastenartige Wandungen geeignet.

Weiterhin ist es zweckmässig, die Erfindung bei solchen Innenmischern anzuwenden, die stempellos ausgeführt sind, da bei ihnen in einfacher Weise im Bereich der Einfüllöffnung eine deckelartige Abdichtung mit Saug- bzw. Druckanschluss installieren lässt.

Weitere Einzelheiten der Erfindung werden anhand der Zeichnung erläutert, in der Ausführungsbeispiele der Erfindung dargestellt sind.

Es zeigen :

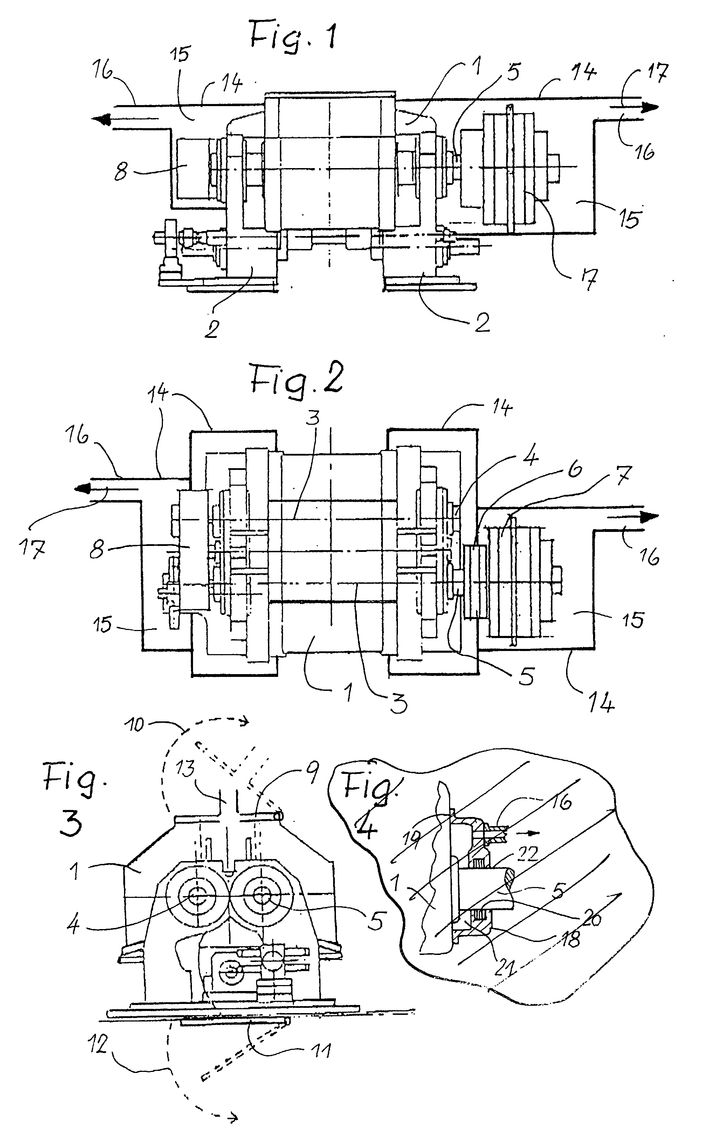

Fig. 1 einen schematisch dargestellten stempellosen Innenmischer für Kautschuk und Kautschukmischungen in der Vorderansicht,
Fig. 2 den Mischer gemäss Fig. 1 in der Draufsicht,
Fig. 3 den Mischer gemäss Fig. 1 in der Seitenansicht und

Das Gehäuse 1 des Mischers ist auf Füssen 2 gelagert, es nimmt die Mischkammer auf, in der zwei Rotoren gegensinnig drehen. Ihre Achsen 3 verlaufen parallel zueinander. Die zugehörigen Wellen 4, 5 sind zu beiden Seiten des Mischers aus dem Gehäuse 1 herausgeführt. An der Welle 4 greift über eine Kupplung 6 ein hydraulischer Antrieb 7 an. Auf der gegenüberliegenden Seite des Mischers sind die dort befindlichen Wellenenden über ein Getriebe 8 verbunden.

Die oben liegende Einfüllöffnung des Mischers ist durch einen Klappenverschluss 9 verschliessbar. Er kann im Sinne des Pfeiles 10 zum Beschicken des stempellosen Kneters geöffnet werden, ggfs. aber auch einen ohnehin vorhandenen Verschluss für die Einfüllöffnung praktisch luftdicht überdecken. Im geschlossenen Zustand wird somit die Einfüllöffnung bzw. ein darunter noch befindlicher Verschluss hermetisch abgeschlossen. Das fertige Mischgut verlässt den Mischer durch einen z.B. klappbaren Sattel 11; dessen Öffnungsbewegung ist durch einen Pfeil 12 angedeutet. Sollte der Sattelverschluss nicht dicht genug sein, kann ein zusätzliches z.B. klappbares Verschlusselement vorgesehen werden, das die Vakuumanwendung ermöglicht.

Der Klappenverschluss 9 hat einen Rohranschluss 13, der über eine Leitung mit einer Unterdruckquelle verbunden ist, um den Mischvorgang bei Vakuum durchführen zu können.

Wichtig ist nun, dass zu beiden Seiten des Mischers vom Gehäuse 1 ausgehend und dort luftdicht befestigte Wandungen 14 vorgesehen sind, die geschlossene Kästen oder Zellen 15 bilden, die ihrerseirs ebenfalls mit einem Unterdruckanschluss 16 versehen sind. Die Luft wird dort im Sinne der Pfeile 17 abgesaugt, wobei der Unterdruck so eingestellt ist, dass sich zwischen der Mischkammer einerseits und den Zellen 15 keine Druckunterschiede ergeben können. Druckverluste können also durch die Spalte oder Schlitze nicht entstehen, die sich konstruktiv an den Stellen ergeben, an denen die Wellen 4, 5 durch das Gehäuse 1 bzw. die Wandungen der Mischkammer hindurchtreten. Antriebsseitig sind die Kammern bzw. Zellen 15 so ausgedehnt, dass sie auch die Kupplung 6 und den Hydraulikantrieb 7 hermetisch umschliessen.

## Patentansprüche

1. Elastomerinnenmischer, insb. Mischer für Kautschuk und Kautschukmischungen, mit einer Mischkammer, einem oder zwei hierin befindlichen Rotoren mit die Wandung der Mischkammer bzw. ihres Gehäuses (1) durchsetzenden Wellen (4, 5) und einer oben gelegenen, verschließbaren Einfüllöffnung für das Mischgut und einem unten gelegenen, zum Verschließen der Austrittsöffnung dienenden, z.B. klappbaren Sattel (11), wobei dem Mischer eine oder mehrere Anschlüsse (16) an eine Saugluft- oder Drucklufteinrichtung zur Beeinflussung des Druckes innerhalb der Mischkammer zugeordnet sind, **dadurch gekennzeichnet, daß** die für den Durchtritt der Wellenenden der Rotoren durch die Wandungen der Mischkammer bzw. des Gehäuses (1) dienenden Durchbrechungen außen von praktisch luftdichten Wandungen (14) umschlossen sind, die einen oder mehrere Anschlüsse (16) für eine Luftunterdruck- bzw. Luftüberdruckeinrichtung aufweisen, wobei die Wandungen (14) auch den Antrieb (17) des Mischers umschließen.

2. Mischer nach Anspruch 1, **dadurch gekennzeichnet, daß** die Wandungen (14) Kästen oder Zellen bilden.

3. Mischer nach Anspruch 1, **dadurch gekennzeichnet, daß** die mit Wellendichtungen (20) ausgestattete(n) Wandung(en) (18) von den Rotorwellen (5) durchsetzt sind.

4. Mischer nach Anspruch 1, **dadurch gekennzeichnet, daß** ihm ein hydraulischer Antrieb zugeordnet ist.

5. Mischer nach Anspruch 1 und 1, **dadurch gekennzeichnet, daß** die Kästen oder Kammern zu beiden Seiten des Mischers im Bereich der Wellenenden für den bzw. die Rotoren angeordnet sind.

6. Mischer nach einem oder mehreren vorhergehenden Ansprüchen, bei dem der Verschluß (9) für die Einfüllöffnung mit einem Anschluß (13) für die Überdruck- bzw. Unterdruckeinrichtung versehen ist.

7. Mischer mit einem Verschluß für die Einfüllöffnung und/oder die Austrittsöffnung der Mischkammer nach Anspruch 1, **dadurch gekennzeichnet, daß** dem Verschluß (11, 9) ein ihn überdeckende, einen praktisch luftdichten Abschluß bildendes Verschlußelement zugeordnet ist.

## Claims

1. Elastomer internal mixer, more especially a mixer for rubber and rubber mixtures, said mixer having a mixing chamber, one or two rotors which are situated therein and have shafts (4, 5) which extend through the wall of the mixing chamber or respectively of its housing (1), and an upper closable filler opening for the material to be mixed and a lower saddle (11), which serves to close the discharge opening, e.g. a foldable saddle, the mixer having associated therewith one or more connections (16) for connection to an intake air means or a compressed air means to influence the pressure within the mixing chamber, **characterised in that** the openings, which are used for the shaft ends of the rotors to pass through the walls of the mixing chamber or respectively of the housing (1), are surrounded externally by practically airtight walls (14), which have one or more connections (16) for a reduced air pressure means or an excessive air pressure means, the walls (14) also surrounding the drive (17) of the mixer.

2. Mixer according to claim 1, **characterised in that** the walls (14) form boxes or chambers.

3. Mixer according to claim 1, **characterised in that** the rotor shafts (5) extend through the wall(s) (18) provided with shaft seals (20).

4. Mixer according to claim 1, **characterised in that** an hydraulic drive is associated therewith.

5. Mixer according to claims 1 and 2, **characterised in that** the boxes or chambers are disposed on both sides of the mixer in the region of the shaft ends for the rotor or the rotors respectively.

6. Mixer according to one or more preceding claims, wherein the closure (9) for the filler opening is provided with a connection (13) for the excessive pressure means or reduced pressure means.

7. Mixer, having a closure for the filler opening and/or the discharge opening of the mixing chamber, according to claim 1, **characterised in that** the closure (11, 9) has associated therewith a closure element which covers said closure and forms a practically airtight seal.

## Revendications

1. Mélangeur interne pour des élastomères, en particulier mélangeur pour du caoutchouc et des mélanges de caoutchouc, comprenant une chambre de mélange, un ou deux rotors placés à l'intérieur de la chambre de mélange et ayant des arbres (4, 5) traversant la paroi de la chambre de mélange ou de son carter (1), et une ouverture de remplissage pour le mélange, obturable et placée sur le dessus, et, par exemple, un berceau (11) rabattable, placé sur le dessous et servant à obturer l'ouverture de sortie, où un ou plusieurs raccordements (16) à un dispositif à dépression ou à air comprimé sont associés au mélangeur pour influencer la pression à l'intérieur de la chambre de mélange,
**caractérisé en ce que** les percées servant au passage des extrémités d'arbres des rotors à travers les parois de la chambre de mélange ou du carter (1) sont entourées de parois (14) pratiquement étanches, de l'extérieur, à l'air, lesquelles parois comprennent un ou plusieurs raccordements (16) pour un dispositif à sous-pression d'air ou à surpression d'air, où les parois (14) entourent également la commande (17) du mélangeur.

2. Mélangeur selon la revendication 1, **caractérisé en ce que** les parois (14) constituent des caissons ou des cellules.

3. Mélangeur selon la revendication 1, **caractérisé en ce que** la ou les paroi(s) (18) dotée(s) de garnitures d'arbres (20) est ou sont traversée(s) par les arbres (5) des rotors.

4. Mélangeur selon la revendication 1, **caractérisé en ce qu'**une commande hydraulique est associée au mélangeur.

5. Mélangeur selon les revendications 1 et 2, **caractérisé en ce que** les caissons ou chambres sont disposés des deux côtés du mélangeur, dans la zone des extrémités d'arbres du rotor ou des rotors.

6. Mélangeur selon l'une quelconque ou plusieurs des revendications précédentes, dans lequel la fermeture (9) pour l'ouverture de remplissage est dotée d'un raccord (13) pour le dispositif à surpression ou à dépression.

7. Mélangeur doté d'une fermeture pour l'ouverture de remplissage et/ou pour l'ouverture de sortie de la chambre de mélange selon la revendication 1, **caractérisé en ce qu'**un élément de fermeture, formant une obturation pratiquement étanche à l'air, est associé à la fermeture (11, 9) en la recouvrant.
